# EUROPEAN PATENT APPLICATION

(11) **EP 3 789 942 A1**
(43) Date of publication of application: **10.03.2021**
(21) Application number: 20188307.1
(22) Date of filing: 29.07.2020
(51) Int. Cl.: G06Q 10/06, B63B 79/40

(54) **AUTOMATED OPERATION OF UNMANNED WATERBORNE VESSELS**

(30) Priority: 29.08.2019 GB 201912395
(71) Applicant: Rolls-Royce plc, London N1 9FX (GB)
(72) Inventor: Field, Colin, Derby, Derbyshire DE24 8BJ (GB); Ellison, Paul, Derby, Derbyshire DE24 8BJ (GB)
(74) Representative: Rolls-Royce plc

(57) **Abstract**

A computer-based method for automated operation of an unmanned waterborne vessel is provided. The method includes steps of: providing a mission plan for the vessel, the mission plan defining a desired activity of the vessel over a period of time; determining different possible configurations of machinery of the vessel to fulfil the mission plan; ranking the possible machinery configurations; selecting a highest ranked machinery configuration; and formulating an engineering plan which implements the selected machinery configuration in order to operate the vessel in accordance with the mission plan; and executing the engineering plan.

## Description

### Field of the disclosure

The present disclosure relates to automated operation of unmanned waterborne vessels, e.g. via automated operation of their platform systems.

### Background

Modern ships typically require the effective, efficient and safe operation of diverse platform systems, including electrical, propulsion, fuel and stability systems. Extending the speed, endurance and autonomous capability of military and civil autonomous ships requires more complex platform systems than are currently provided by commercially available Unmanned Surface Vessels (USVs). The expense and difficulty of having on-shore personnel remotely control these complex platform systems, particularly during periods of restricted communication, means that high levels of autonomy are needed in the operation and management of power, propulsion and auxiliary systems in USVs.

Medium (12 to 50 m in length) and large (50+ m in length) ships have typically have two or more power sources (e.g. reciprocating engines, turbine engines, energy storage systems and/or renewable sources) and two or more power sinks (e.g. propellers, thrusters and/or payloads). Such arrangements provide redundancy and improve efficiency across a wider range of operating conditions (i.e. running two engines at part-load when resilience is required, or one engine at higher power when efficiency is required). However, this increased platform complexity, combined with the wider range of operating conditions, substantially increases the engineering challenge of operating medium and large USVs relative to smaller vessels.

It would be desirable to provide an approach for operating a USV, or other waterborne vessels, which addresses this challenge.

### Summary

According to a first aspect there is provided a computer-based method for automated operation of an unmanned waterborne vessel, the method including steps of:
providing a mission plan for the vessel, the mission plan defining a desired activity of the vessel over a period of time;
determining different possible configurations of machinery of the vessel to fulfil the mission plan;
ranking the possible machinery configurations;
selecting a highest ranked machinery configuration; and
formulating an engineering plan which implements the selected machinery configuration in order to operate the vessel in accordance with the mission plan; and
executing the engineering plan.

In this way, the vessel can be automatically operated across a wide range of operating conditions without intervention of a human engineer to maintain equipment and resources and to decide and conduct activities.

By "machinery of the vessel" is meant one or more power sources and typically also auxiliary equipment such as valves, pumps, electrical switch gear, tanks, compressors etc. which are internal to the vessel and which the power sources rely on for their operation and/or which they power in order to perform other vessel operations.

The method is computer-implemented. Accordingly, further aspects of the present disclosure provide: a computer program comprising code which, when the code is executed on a computer, causes the computer to perform the method of the first aspect; a computer readable medium storing a computer program comprising code which, when the code is executed on a computer, causes the computer to perform the method of the first aspect; and a data processing system comprising one or more processors adapted to perform the method of the first aspect. For example, a data processing system can be provided for automated operation of an unmanned waterborne vessel, the system including: one or more processors configured to: provide a mission plan for the vessel, the mission plan defining a desired activity of the vessel over a period of time; determine different possible configurations of machinery of the vessel to fulfil the mission plan; rank the possible machinery configurations; select a highest ranked machinery configuration; and formulate an engineering plan which implements the selected machinery configuration in order to operate the vessel in accordance with the mission plan; and command execution of the engineering plan. The system thus corresponds to the method of the first aspect. Yet another aspect of the present disclosure provides an unmanned waterborne vessel equipped with the data processing system of the previous aspect for automatic operation of the vessel.

Optional features of the present disclosure will now be set out. These are applicable singly or in any combination with any aspect of the present disclosure.

The method may further include, between the steps of determining and ranking, filtering the different possible machinery configurations to identify those which meet a minimum service requirement, wherein the ranking step is performed on the filtered possible machinery configurations.

The method may further include: providing plural engineering modes which specify power availabilities for respective possible machinery configurations of the vessel. The determination of the different possible machinery configurations can then be based on the engineering modes. The engineering modes may also specify maximum durations of the power availabilities and/or financial costs. The specified power availabilities typically relate to one or more of propulsive power, electrical power, thermal power and chemical power (i.e. fuel).

The engineering modes may further specify, for the respective possible machinery configuration of the vessel, priority scores of one or more operational categories of the vessel. The ranking (and optionally the filtering) can then be based on the priority scores. The operational categories may be any one or more of: financial cost, endurance, quietness, performance and survivability.

The vessel may have plural power sources (e.g. reciprocating engines, turbine engines, energy storage systems and/or renewable sources) for powering the vessel, the different possible machinery configurations including different utilisations of the power sources.

The vessel may be at least 12 m in length.

The vessel may be an unmanned surface vessel or an unmanned underwater vessel (i.e. a submarine).

### Brief description of the drawings

Embodiments will now be described by way of example only, with reference to the Figures, in which:
Figure 1 shows schematically an Autonomous Vessel Equipment Controller in the context of other vessel-related systems, and
Figure 2 shows schematically a module architecture for implementing the Autonomous Vessel Equipment Controller.

### Detailed description

Aspects and embodiments of the present disclosure will now be discussed with reference to the accompanying figures. Further aspects and embodiments will be apparent to those skilled in the art. For example, although the following discussion is in the context of a USV system architecture, the present disclosure has wider applicability to other waterborne vessels, such as submarines.

The present disclosure proposes an on-board decision-making and control layer in a USV system architecture which autonomously operates the vessel's platform systems in support of a mission, performing a similar role to the engineering department on a manned ship. Such a control system communicates with a mission manager, senses the status and health of machinery on board, make decisions about how best to operate the systems, and then provides control accordingly. Its aim is to provide an optimum balance of economy, performance or life, according to the priorities of the mission. In the following, the control system is referred to as the Autonomous Vessel Equipment Controller (AVEC).

A large USV can be highly complex, with engines of different types, a variety of different fluid systems, adjustable ballasting, a complex electrical network and significant redundancy across all systems. Furthermore, the duration of missions and the combinations of ship configurations required to support them, complicates the management of the platform systems.

For example, the AVEC optimises the operation of a number of prime movers (e.g. reciprocating engines and/or turbine engines) of the USV. However, it also configures and re-configures network systems (e.g. fluid and electrical systems) in response to changing mission demands, equipment degradation and unavailability. Thus the AVEC performs a planning and decision-making role that interfaces to the ship machinery and equipment through automated systems.

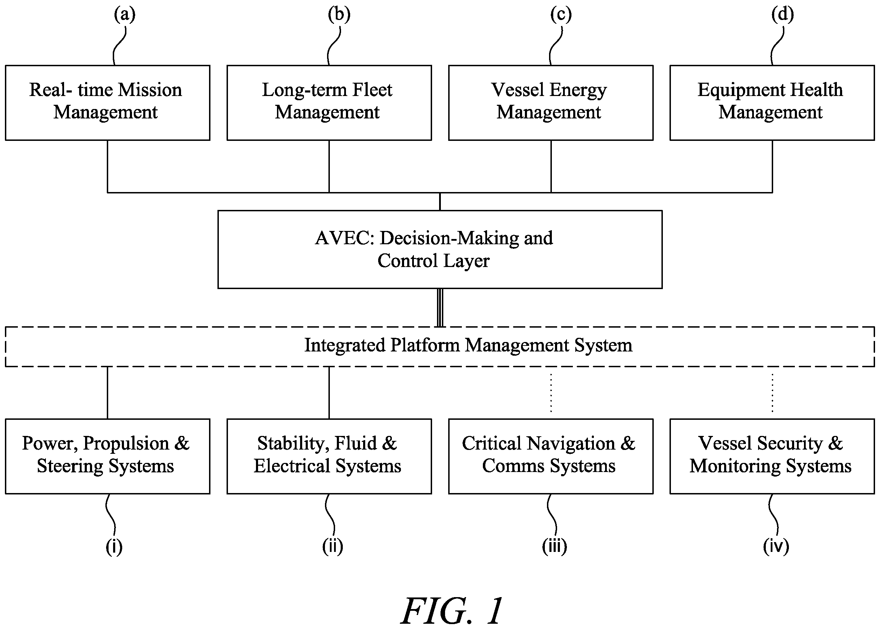

Figure 1 shows schematically the AVEC in the context of other vessel-related systems. The AVEC utilises an Integrated Platform Management System (i.e. a computer network) of the vessel which communicates with and controls various platform systems of the vessel, such as (i) power, propulsion and steering, (ii) stability, fluid and electrical, (iii) critical navigation and communications, and (iv) security and monitoring. The AVEC resides above this command and communication level and performs decision-making and control to decide how the vessel platform systems are to operate, on the basis of various constraints as determined by issues of (a) real-time mission management, (b) long-term fleet management, (c) vessel energy management, and (d) equipment health management.

The AVEC operates using the concept of a Mission Plan, which is an order received by the AVEC from a command authority (e.g. a remote control centre or an on-board mission management system). The AVEC interprets the Mission Plan into an Engineering Plan which includes all the machinery configuration actions and material requirements to implement the Mission Plan. The AVEC decides a sequence of platform system configurations for the Engineering Plan to best meet the Command Order, while utilising the ship machinery in an efficient manner.

As part of this role, the AVEC continually assesses the status and health of the ship machinery. In the event that a problem occurs with a piece of machinery, the AVEC determines how to contain the problem and to mitigate or minimise the impact on performance of the overall Mission Plan.

The AVEC also continually assesses and controls the internal environment of the ship, preserving the machinery and reacting to any incident that may compromise the operation of machinery or the ship's integrity, which in turn may impact on ability to deliver the Mission Plan.

By being able to simultaneously monitor machinery status and environment, the AVEC can diagnose and mitigate potential risks to the ship from fire or flood before a ship emergency rises. The decision-making and management of ship emergencies caused by machinery breakdown, fire and flood are also undertaken by the AVEC.

During operation, the AVEC has three high-level functions, which can be described as:
- Sense - Gather information about ship's platform systems and Mission Plan,
- Think - Interpret the sensory data and decide how to best respond to the environment in order to meet the objectives of the Mission Plan,
- Act - Take an action, by using some sort of effector, which changes a system's status and/or the environment outside the system.

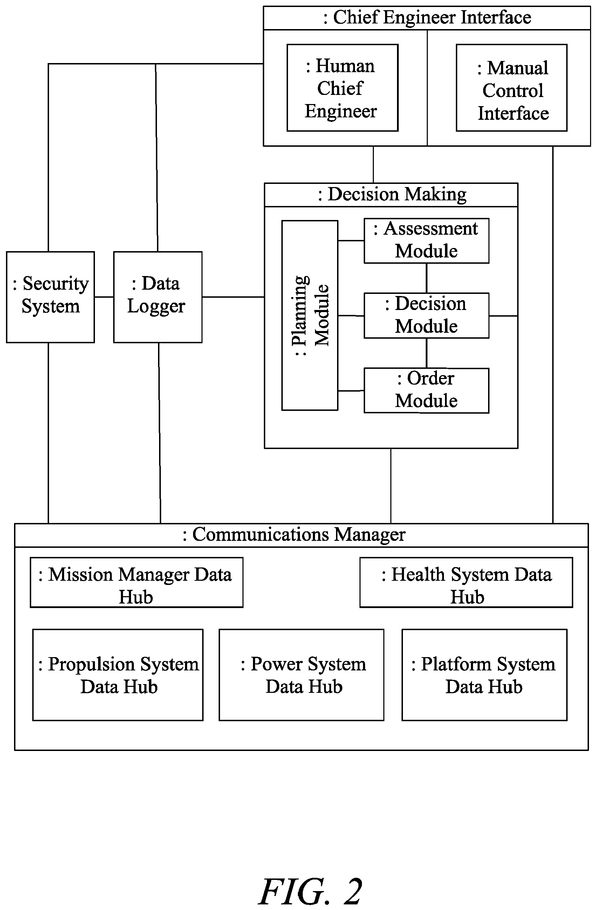

Figure 2 shows schematically a module architecture for implementing the AVEC. The Sense, Think and Act functions are performed by a Decision Making module having Assessment sub-modules for performing Sense functions, a Decision sub-module for performing Think functions, and an Order sub-module for performing Act functions. These sub-modules are supported by an on-going planning process performed by a Planning sub-module, and are further supported by an internal Communications Manager which contains various discrete Data Hubs for continually retrieving data via the Integrated Platform Management System from platform systems, such as the vessel's Propulsion System, Power System and Platform System (i.e. (i) to (iv) discussed above in relation to Figure 1). The Communications Manager also has Data Hubs for communicating with a Mission Manager (i.e. (a) to (c) discussed above in relation to Figure 1), and a Health System (i.e. (d) discussed above in relation to Figure 1). Thus these Hubs are the channels by which signals and orders are sent out from the AVEC.

For interaction with an on-board human engineer, the AVEC has a Chief Engineer Interface for the publishing and receipt of messages, and also for allowing a manual control override.

A Data Logger communicating with the Decision Making module, Communications Manager and Chief Engineer Interface performs time-stamped logging of events and decisions. A Security System also communicating with the Decision Making module, Communications Manager and Chief Engineer Interface inspects data received from the Communications Manager and the Chief Engineer Interface and compares these with the data log to identify any adverse, malicious and/or unintended manipulation of the AVEC.

Examples of the Think (interpretation and decision-making) function are discussed in more detail below.

### Plan Routine Configuration Changes

The AVEC generates an Engineering Plan which identifies the machinery and the necessary state (i.e. configuration) of that machinery to fulfil the Mission Plan, and which also provides a timeline for changing configurations by listing what commands need to be sent to the machinery and at what time. Table 1 shows an example Mission Plan with associated Engineering Modes (discussed below in relation to Table 3), and Table 2 shows an example of an Engineering Plan.

**Table 1: Mission Plan**

| **MissionPhaseName** | **PhaseStart** | **PhaseDuration (s)** | **ModeIDEngineering** |
|---|---|---|---|
| Alongside | 04-Sep-2025 09:30:00 | 5400 | E01 |
| Harbour Transit | 04-Sep-2025 11:00:00 | 3599 | E02 |
| Transit | 04-Sep-2025 12:00:00 | 138599 | E07 |
| Conduct ASW | 06-Sep-2025 02:30:00 | 48600 | E08 |
| Transit | 06-Sep-2025 16:00:00 | 225000 | E07 |
| Harbour Transit | 09-Sep-2025 06:30:00 | 5400 | E02 |
| Alongside | 09-Sep-2025 08:00:00 | 0 | E01 |

**Table 2: Engineering Plan**

| **PlanPhaseSerial** | **PhaseStart** | **Phase Duration(s)** | **ComponentID** | **ComponentState (start)** | **ComponentState (End)** |
|---|---|---|---|---|---|
| 147062 | 04-Sep-202510:58:45 | 70 | DG1 | 2 | 1 |
| 147063 | 04-Sep-202510:59:55 | 5 | PDP | 0 | 1 |
| | | | PDS | 0 | 1 |
| 147064 | 04-Sep-202511:00:00 | 1800 | PMP | 0 | 1 |
| | | | PMS | 0 | 1 |
| | | | FP1 | 0 | 1 |
| | | | FP2 | 0 | 1 |
| 147065 | 04-Sep-202511:30:00 | 90 | FP1 | 1 | 0 |
| 147066 | 04-Sep-202511:31:30 | 300 | | | |
| 147067 | 04-Sep-202511:36:30 | 360 | FP1 | 0 | 1 |
| 147068 | 04-Sep-202511:42:30 | 70 | FP1 | 1 | 0 |
| 147069 | 04-Sep-202511:43:40 | 70 | | | |
| 147070 | 04-Sep-202511:44:50 | 5 | BSP | 0 | 1 |
| 147071 | 04-Sep-202511:44:55 | 5 | BSS | 1 | 0 |
| 147072 | 04-Sep-202511:45:00 | 90 | FP2 | 1 | 0 |
| 147073 | 04-Sep-202511:46:30 | 90 | DSP | 1 | 0 |
| 147074 | 04-Sep-202511:48:00 | 90 | | | |
| 147075 | 04-Sep-202511:49:30 | 555 | FB2 | 0 | 1 |
| 147076 | 04-Sep-202511:58:45 | 70 | FB2 | 1 | 0 |
| 147077 | 04-Sep-202511:59:55 | 5 | | | |
| 147078 | 04-Sep-202512:00:00 | 90 | DG1 | 2 | 1 |
| 147079 | 04-Sep-202512:01:30 | 1710 | | | |
| 147080 | 04-Sep-202512:30:00 | 1730 | PMP | 1 | 2 |
| 147081 | | | PMS | 1 | 2 |
| 147082 | 04-Sep-202512:58:50 | 70 | DSP | 0 | 1 |
| 147083 | 04-Sep-202513:00:00 | | FP1 | 1 | 0 |

The Engineering Plan is updated to reflect long-term adjustments to the Mission Plan, short-term adjustments to the power requirements from the external command authority, and immediate arising situations such as machinery breakdowns or emergencies. Thus the AVEC continually updates the Engineering Plan, the updates creating a timeline of commands that are sent to the ship's machinery in order for it to be reconfigured as required.

Construction of the Engineering Plan typically requires several steps to be followed by the Decision sub-module:
1. Determine multiple different possible configurations of each of the power networks of the vessel (e.g. propulsive, electrical and/or thermal) for each phase in the Mission Plan.
2. Filter the configurations to identify those which meet a minimum power, or other service, requirement.
3. Rank the filtered configurations by their ability to meet additional demands such as: minimum noise, maximum efficiency, maximum power, minimum cost and/or maximum resilience in the event of machinery failure, according to the priority scores of the Engineering Mode used in the relevant phase of the Mission Plan at the time.
4. Select the highest ranked configuration and scheduling this to be implemented at a certain time.
5. Schedule reconfiguration of the machinery systems as a series of Engineering Plan commands that are issued to the Order sub-module, so that each configuration is ready and implemented by the time it is required.

As an example, the Engineering Plan created by the AVEC interprets the Mission Plan to transit the vessel to a port with a time of departure and a time of arrival. The Engineering Plan schedules the propulsion system and its auxiliaries to be made available. It also pro-actively schedules the transfer of fuel after having calculated the quantity to transfer, the amount of time this will take to transfer and when it is required.

Alternatively, if the commanded Mission Plan is to remain alongside, then the AVEC knows that the propulsion system is not needed to fulfil the order, whereas other supporting systems, such as electrical power management, have higher importance.

There are also activities that are always present in any Engineering Plan and are independent of specific phases in the Mission Plan. These activities concern preserving the internal environment of the ship and include systems such as cooling and fire protection.

### Determine and Report Vessel Capabilities

The AVEC interprets a Mission Plan, received as an update over a computer interface, into engineering equipment configurations that enable that Plan to be fulfilled. The AVEC addresses the following questions in respect of the Mission Plan:
- What machinery is needed to perform each step of the Mission Plan?
- Can the available machinery meet the required performance?

A mechanism by which the AVEC can achieve this is through the creation and maintenance of a list of predefined platform system configurations, known as Engineering Modes, which the Decision sub-module can select from. Each Mode specifies the amount of available power of each type (e.g. propulsive, electrical, thermal etc.). Typically each Mode also specifies the maximum duration for which the Mode can be sustained, and the cost of the Mode (e.g. in £/s). Additionally each Mode may be associated with scores for a series of operational priority categories which the Decision sub-module can use to reconfigure equipment as circumstances change. Example, operational priority categories are: cost, endurance, quietness, performance and system survivability. Table 3 shows an example of different Engineering Modes.

**Table 3: Engineering Modes**

| **Mode ID** | **Mode Name** | **Min E Power (W)** | **Min P Power (W)** | **PriorityCost** | **PriorityEndure** | **PriorityQuiet** | **PriorityPerform** | **PrioritySurvive** |
|---|---|---|---|---|---|---|---|---|
| E00 | No Vessel Mode | 0 | 0 | 1 | 0 | 0 | 0 | 0 |
| E01 | Harbour Mode | 200,000 | 0 | 1 | 2 | 0 | 0 | 0 |
| E02 | Special Sea Dutyman | 200,000 | 200,000 | 4 | 3 | 0 | 2 | 1 |
| E03 | Elec Priority, DP2 | 400,000 | 500,000 | 4 | 3 | 0 | 2 | 1 |
| E04 | Prop Priority, DP2 | 300,000 | 500,000 | 4 | 3 | 0 | 2 | 1 |
| E05 | Elec Priority, DP0 | 800,000 | 500,000 | 3 | 2 | 0 | 1 | 0 |
| E06 | Prop Priority, DP0 | 300,000 | 1,200,000 | 3 | 2 | 0 | 1 | 0 |
| E07 | Efficient Cruise - one DG | 300,000 | 500,000 | 1 | 2 | 0 | 0 | 0 |
| E08 | Minimum URN | 200,000 | 200,000 | 3 | 2 | 1 | 0 | 0 |
| E09 | Elec Priority, Battle Override | 800,000 | 500,000 | 4 | 3 | 0 | 1 | 2 |
| E10 | Prop Priority, Battle Override | 300,000 | 1,200,000 | 4 | 3 | 0 | 1 | 2 |

The different priority scores indicate the relative importance of certain platform system operating characteristics, such as low cost of operation versus minimum platform noise versus maximum platform resilience / survivability, which are deemed important for that Mode and ultimately contribute to the performance of the Mission Plan.

The priority scores enable the AVEC to articulate the impact on the Engineering Mode, and ultimately the Mission Plan, in the event that a defect renders a machinery item unavailable.

### Optimise for Economic Operation or Sustainment of the Vessel

Part of the role of a human engineer is to maintain the equipment and resource material, such as fuel and electrical power. These routine actions manage such things as engine life hours, cleaning and transferring of fuel and clearing bilges. These activities are conducted by the AVEC and are included in the Engineering Plan. The triggers for conducting activities may be periodic, e.g. at a frequency embedded in the Engineering Plan, or determined by equipment health monitoring considerations.

The AVEC optimises the operation of the vessel's machinery within the boundaries of the inforce Mission Plan. This means that the machinery is configured to give an optimum balance of fuel consumption and life usage, whilst still meeting the capability requirements and performance criteria of the Mission Plan.

To enable the AVEC to perform this optimisation, it is equipped with the efficiency maps of the machinery under its control (especially prime movers such as engines and generators) and updates these based on health status changes and surveys based on readings from fuel flow meters and/or fuel tank level gauges. The AVEC has the authority to switch between prime movers so that as few as possible are running and consuming fuel, maximising the efficiency of the whole system. The AVEC may schedule certain non-critical activities to phases of the Mission Plan when there will be a surplus of a certain capability - such as electrical power - without having to start an additional generator.

As part of its routine activities, the AVEC transfers fluids such as seawater for cooling, fuel and ballast around the ship. This can impact on ship stability, trim, sea keeping and on the efficiency of propulsion. As a consequence, the AVEC receives a feed from a stability computer, typically integrated into the Integrated Platform Management System, to enable the calculation of the consequences of its actions.

### Determine and Enact Machinery Protection and Breakdown Actions

On manned ships and in particular on naval vessels, a machinery breakdown or an emergency is managed by well-defined procedures. Corresponding procedures are implemented by the AVEC.

Thus the AVEC has a Machinery Breakdown procedure and an Emergency procedure either or both of which it implements as a routine function at sea or alongside in response to an unplanned alarm. Alarms generated by environmental sensors for flood and fire are dealt with by adopting these Emergency procedures, which have priority over all other activities.

For Emergency alarms, the AVEC verifies the alarm and location of the emergency. This is done by the AVEC cross-referencing the alarm with other sensors such as CCTV, temperature sensors in the adjacent compartments or machinery alarms that may be generated at the location. This requires fusion of sensor inputs, via the detection and cross-comparison of features which appear in multiple sensors, so that the AVEC can determine from the available data the probability, the nature and the timing of an incident that has occurred.

Once verified, the AVEC acknowledges the alarms and publishes an immediate Ship Emergency notification message to the mission manager (i.e. external command authority or on-board autonomous system), which then implements its own ship emergency procedures which may include suspending the inforce Mission Plan and issuing a revised Mission Plan. Particularly if the mission manager is an on-board autonomous system, it may also contact a separate remote operating centre or other supervisory authority for the USV.

The AVEC's embedded emergency procedures typically consist of a series of commands that start and reconfigure machinery on board to increase the survivability of the platforms, the commands being instructed through the creation of an updated Engineering Plan. The AVEC is capable of managing changes in Mission Plans simultaneously with managing the incident. Part of this includes the assessment of the machinery and services present in the affected and adjacent compartments in order to isolate electrical and fuel services to reduce risk and to preserve machinery from damage.

After taking actions to increase survivability, the AVEC updates the Engineering Plan to suppress the incident and then immediately monitors for signs that the emergency has been stabilised. If sensors indicate that the incident has not been addressed, the AVEC continues to supress the incident. For example, in the event of a fire this may mean switching from gaseous to water extinguishment.

### General Considerations

Embodiments may be described as a process which is depicted as a flowchart, a flow diagram, a data flow diagram, a structure diagram, or a block diagram. Although a flowchart may describe the operations as a sequential process, many of the operations can be performed in parallel or concurrently. In addition, the order of the operations may be rearranged. A process is terminated when its operations are completed, but could have additional steps not included in the figure. A process may correspond to a method, a function, a procedure, a subroutine, a subprogram, etc. When a process corresponds to a function, its termination corresponds to a return of the function to the calling function or the main function.

The term "computer readable medium" may represent one or more devices for storing data, including read only memory (ROM), random access memory (RAM), magnetic RAM, core memory, magnetic disk storage mediums, optical storage mediums, flash memory devices and/or other machine readable mediums for storing information. The term "computer-readable medium" includes, but is not limited to portable or fixed storage devices, optical storage devices, wireless channels and various other mediums capable of storing, containing or carrying instruction(s) and/or data.

Furthermore, embodiments may be implemented by hardware, software, firmware, middleware, microcode, hardware description languages, or any combination thereof. When implemented in software, firmware, middleware or microcode, the program code or code segments to perform the necessary tasks may be stored in a computer readable medium. One or more processors may perform the necessary tasks. A code segment may represent a procedure, a function, a subprogram, a program, a routine, a subroutine, a module, a software package, a class, or any combination of instructions, data structures, or program statements. A code segment may be coupled to another code segment or a hardware circuit by passing and/or receiving information, data, arguments, parameters, or memory contents. Information, arguments, parameters, data, etc. may be passed, forwarded, or transmitted via any suitable means including memory sharing, message passing, token passing, network transmission, etc.

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and sub-combinations of one or more features described herein.

## Claims

1. A computer-based method for automated operation of an unmanned waterborne vessel, the method including steps of:
providing a mission plan for the vessel, the mission plan defining a desired activity of the vessel over a period of time;
determining different possible configurations of machinery of the vessel to fulfil the mission plan;
ranking the possible machinery configurations;
selecting a highest ranked machinery configuration; and
formulating an engineering plan which implements the selected machinery configuration in order to operate the vessel in accordance with the mission plan; and
executing the engineering plan.

2. The method according to claim 1, further including, between the steps of determining and ranking, filtering the different possible machinery configurations to identify those which meet a minimum service requirement, wherein the ranking step is performed on the filtered possible machinery configurations.

3. The method according to claim 1 or 2, further including:
providing plural engineering modes which specify power availabilities for respective possible machinery configurations of the vessel;
wherein the determination of the different possible machinery configurations is based on the engineering modes.

4. The method according to claim 3, wherein:
the engineering modes further specify, for the respective possible machinery configuration of the vessel, priority scores of one or more operational categories of the vessel; and
wherein the ranking is based on the priority scores.

5. The method according to any one of the previous claims, wherein the vessel has plural power sources for powering the vessel, the different possible machinery configurations including different utilisations of the power sources.

6. The method according to any one of the previous claims, wherein the vessel is at least 12 m in length.

7. A computer program comprising code which, when the code is executed on a computer, causes the computer to perform the method of any one the previous claims.

8. A computer readable medium storing the computer program comprising code according to claim 7.

9. A data processing system comprising one or more processors adapted to perform the method of the any one of claims 1 to 6.

10. An unmanned waterborne vessel equipped with the data processing system of claim 9 for automatic operation of the vessel.
